# EUROPÄISCHE PATENTSCHRIFT

(11) **EP 0 575 638 B1**
(45) Veröffentlichungstag und Bekanntmachung des Hinweises auf die Patenterteilung: **13.09.1995**
(21) Anmeldenummer: 92110166.3
(22) Anmeldetag: 16.06.1992
(51) Int. Cl.: G21C 19/07, B65D 81/07

(54) **Lagergestell zum stosssicheren Lagern von langgestreckten Gegenständen, insbesondere Kernbrennstoff enthaltenden Brennstäben und/oder Kernreaktorbrennelementen**
Storage frame for shockproof storage of elongate elements, especially nuclear fuel containing fuel rods and/or nuclear fuel assemblies
Ratelier de stockage pour stocker de façon protégée aux chocs des éléments oblongs, notamment des barreaux de combustible nucléaire ou/et des assemblages de combustible nucléaire

(43) Veröffentlichungstag der Anmeldung: 29.12.1993
(73) Patentinhaber: SIEMENS AKTIENGESELLSCHAFT, 80333 München (DE)
(72) Erfinder: Kratz, Gerhard, W-6054 Rodgau (DE); Sticksel, Nikolaus, W-8755 Alzenau (DE); Dornburg, Heimo, W-6450 Hanau (DE); Cvancar, Horst, W-6057 Dietzenbach (DE)

(56) Entgegenhaltungen:
- EP-A- 0 028 365
- US-A- 2 928 535
- US-A- 3 280 970
- US-A- 4 821 879

## Beschreibung

### Lagergestell zum stoßsicheren Lagern von langgestreckten Gegenständen, insbesondere Kernbrennstoff enthaltenden Brennstäben und/oder Kernreaktorbrennelementen

Es ist üblich, langgestreckte Gegenstände wie Kernreaktorbrennelemente in einem Lagergestell an einem Ende des Kernreaktorbrennelements vertikal aufzuhängen. Solche Kernreaktorbrennelemente haben eine Länge von z.B. 5 m und müssen deswegen zum Lagergestell liegend transportiert werden. Erst am Lagergestell können sie in die Vertikale geschwenkt und dann in das Lagergestell eingehängt werden.

Werden Kernreaktorbrennelemente zur Zwischenlagerung in einem Transportbehälter angeliefert, so müssen sie vor dem Einhängen in das Lagergestell auch noch aus dem Transportbehälter entladen und nach der Zwischenlagerung wieder in den Transportbehälter eingeladen werden.

Diese Manipulationen erfolgen in der Regel von Hand und können zu Beschädigung des Kernreaktorbrennelements führen.

Einzelne Brennstäbe haben eine ähnliche Länge wie Kernreaktorbrennelemente und werden deshalb ebenfalls liegend zu einem Lagergestell transportiert. Dort werden sie liegend in einen Köcher eingeschoben, der anschließend in die Vertikale geschwenkt und dann in das Lagergestell gehängt wird. In einem Transportbehälter verpackte Brennstäbe müssen ebenfalls zur Zwischenlagerung dem Transportbehälter entnommen und bei Beendigung der Zwischenlagerung wieder in den Transportbehälter verpackt werden.

Der Erfindung liegt die Aufgabe zugrunde, ein Lagergestell für langgestreckte Gegenstände wie Brennstäbe oder Kernreaktorbrennelemente zu schaffen, zu dessen Bestückung mit den langgestreckten Gegenständen weder eine Entnahme dieser langgestreckten Gegenstände aus einem Transportbehälter noch ein Schwenken dieser Gegenstände erforderlich ist.

Diese Aufgabe wird erfindungsgemäß durch ein Lagergestell entsprechend Patentanspruch 1 gelöst.

Das Lagergeschirr mit dem Aufnahmebehälter für den langgestreckten Gegenstand kann ohne weiteres auch zu dessen Transport dienen. Das Lagergestell wird sukzessive durch Übereinander- und/oder Nebeneinanderschichten von flachen Körpern bzw. Rahmen aufgebaut, die jeweils Bestandteil eines Lagergeschirrs sind und an denen jeweils ein Aufnahmebehälter quer zur Vertikalen frei pendelnd angehängt ist.

Jeder flache Körper bzw. Rahmen mit quer zur Vertikalen frei pendelnd angehängtem Aufnahmebehälter stellt ferner ein selbständiges Transportgebinde dar, das mit einem Flurförderzeug, also z.B. einem Gabelstapler oder einem Kran , gegriffen und transportiert werden kann und mit dem an beliebiger Stelle mit anderen Transportgebinden ein Lagergestell errichtet werden kann. Dies bedeutet auch, daß ein Kernreaktorbrennelement sofort nach Fertigstellung im Aufnahmebehälter eines solchen Transportgebindes verpackt werden kann, in dem Aufnahmebehälter dieses Transportgebindes während aller Transporte und Lagerungen verbleibt und dem Aufnahmebehälter erst wieder entnommen wird, wenn das Transportgebinde schließlich am endgültigen Verwendungsort des Kernreaktorbrennelements in einem Kernkraftwerk angelangt ist.

Die frei pendelnde Aufhängung des Aufnahmebehälters am flachen Körper, insbesondere am Rahmen, gewährleistet, daß Stöße, seien sie durch Unfall, Unachtsamkeit oder seismische Einwirkungen hervorgerufen, vom langgestreckten Gegenstand im Aufnahmebehälter weitestgehend ferngehalten werden.

Die Patentansprüche 2 bis 7 sind auf vorteilhafte Weiterbildungen des Lagergestells nach Patentanspruch 1 gerichtet, durch die eine stabile und standfeste Positionierung des Lagergestells erreicht wird. Dies ist auch von besonderer Bedeutung, wenn das Lagergestell fernbedient und mechanisiert aufgebaut wird.

Patentanspruch 8 ist auf eine Weiterbildung gerichtet durch die nicht nur eine Strahlungsabschirmung, sondern auch eine zusätzliche Abschirmung des Lagergestells und damit des im Aufnahmebehälter befindlichen langgestreckten Gegenstands gegen Stöße erzielt wird, die von außen auf den Transportcontainer während des Transports einwirken können.

Die Erfindung und ihre Vorteile seien anhand der Zeichnung näher erläutert:

Figur 1 zeigt in perspektivischer Ansicht ein einzelnes Lagergeschirr mit zugehöriger Bodenplatte.

Figur 2 zeigt in perspektivischer Ansicht und in Explosionsdarstellung auf einer Bodenplatte übereinander angeordnete Lagergeschirre.

Figur 3 zeigt in Draufsicht eine Einzelheit zu Figur 2, und

Figur 4 in Seitenansicht eine andere Ausführungsform des Lagergeschirrs.

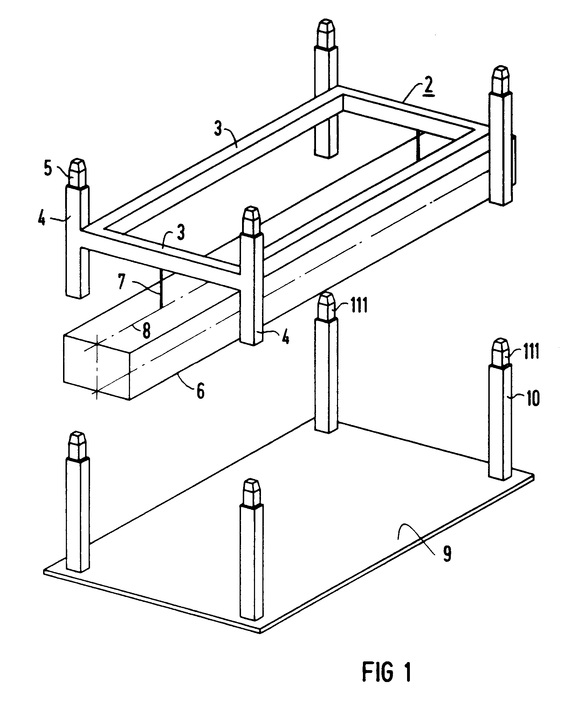

In Figur 1 weist ein Lagergeschirr 2 einen rechteckigen flachen Rahmen aus vier Stahlstreben 3 auf. In jeder Ecke dieses Rahmens ist eine Stütze 4 aus einem Vierkantrohr ebenfalls aus Stahl befestigt. Diese Stützen 4 stehen rechtwinklig auf der durch die Streben 3 bestimmten Ebene und haben beiderseits dieser Ebene gleiche Höhe. An den Oberenden sind in diese Stützen 4 Zapfen 5 eingesetzt, während die Stützen 4 an ihren Unterenden offen sind. An der Unterseite des aus den Streben 3 gebildeten Rahmens befindet sich ein langgestreckter Aufnahmebehälter 6 beispielsweise für ein Kernreaktorbrennelement. Die Längsachse dieses Aufnahmebehälters 6 ist parallel zu der durch die Streben 3 des Rahmens bestimmten Ebene. Dieser Aufnahmebehälter 6 hat ferner rechteckigen Querschnitt und hängt an zwei federnden Stäben 7 aus Stahl. Jeder federnde Stab 7 ist an einer von zwei zueinander parallelen Streben 3 des Rahmens auf der Unterseite befestigt. Die Angriffsstellen der federnden Stäbe 7 am Aufnahmebehälter liegen in einer Schwerpunktsgeraden 8 der dem Rahmen zugewandten Seitenfläche des Aufnahmebehälters 6, so daß der Aufnahmebehälter 6 in allen Richtungen quer zur Vertikalen frei pendelnd an dem Rahmen angehängt ist.

Die in Figur 1 dargestellte Bodenplatte 9 kann der Boden einer Lagerhalle oder auch der Boden eines Transportcontainers sein. Auf der Oberseite dieser Bodenplatte 9 stehen vier Stützen 10 in den Ecken eines Rechtecks. Diese Stützen 10 sind wie die Stützen 4 jeweils aus einem Vierkantrohr aus Stahl. Diese Stützen 10 sind auch alle vier gleich hoch, und an ihren Oberenden sind Zapfen 111 eingesetzt.

Das Lagergeschirr 2 kann mit seinem aus den Streben 3 gebildeten Rahmen beispielsweise auf den beiden Gabelzinken eines Gabelstaplers flach aufliegen und mit diesem Gabelstapler auf den Stützen 10, die sich auf der Bodenplatte 9 befinden, so abgesetzt werden, daß die Zapfen 111 dieser Stützen 10 jeweils in eine Stütze 4 am Rahmen greifen und der Rahmen auf der Bodenplatte 9 in vertikaler Richtung aufgesteckt ist. Andererseits kann ein auf den Stützen 10 abgesetztes Lagergeschirr 2 mit einem Gabelstapler von diesen Stützen 10 abgehoben werden, in dem die Gabelzinken dieses Gabelstaplers unter den Rahmen des Lagergeschirrs 2 gefahren werden.

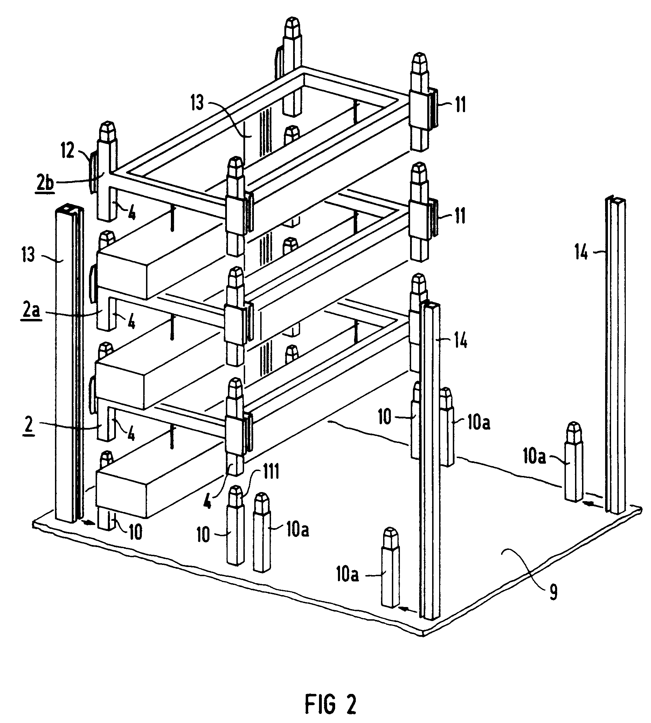

In Figur 2 sind gleiche Teile mit den gleichen Bezugszeichen wie in Figur 1 versehen. Im Unterschied zu Figur 1 ist jedoch auf den Rahmen des auf die Stützen 10 auf der Bodenplatte 9 in vertikaler Richtung aufgesteckten Lagergeschirrs 2 der Rahmen eines gleichen Lagergeschirrs 2a und auf dem Rahmen dieses Lagergeschirrs 2a der Rahmen eines weiteren gleichen Lagergeschirrs 2b in vertikaler Richtung aufgesteckt. Die Rahmen der Lagergeschirre 2, 2a und 2b befinden sich somit in horizontalen Ebenen, die jeweils Abstand voneinander haben.

Auf der Bodenplatte 9 stehen neben den vier gleich hohen Stützen 10 weitere vier gleich hohe Stützen 10a rechtwinklig auf, die gleich wie die Stützen 10 ausgebildet und ebenfalls in den Ecken eines Rechtecks angeordnet sind. Auf diese Stützen 10a können ebenfalls die Rahmen von gleichen Lagergeschirren übereinander in vertikaler Richtung aufgesteckt werden, so daß sich auch die Rahmen dieser Lagergeschirre in horizontalen Ebenen befinden, die jeweils Abstand voneinander haben.

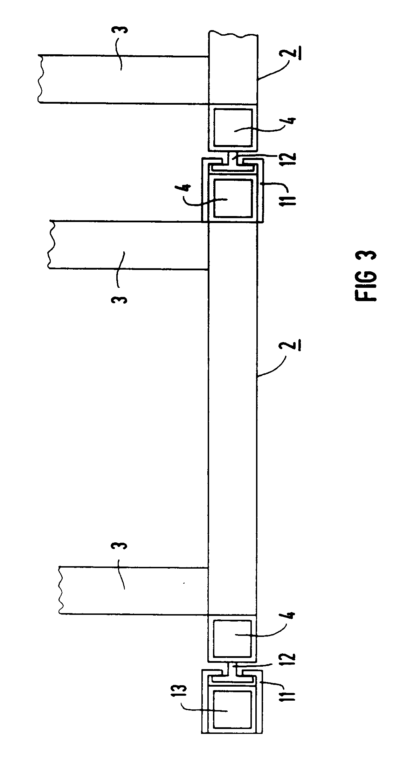

In diesem Fall ist es günstig, wenn die Stützen 4 - wie in Figur 3 zu erkennen ist - auf der einen Seite des Rahmens eine T-Führung 12 und auf der gegenüberliegenden Seite eine dieser T-Führung 12 entsprechende T-Nut 11 aufweisen. Damit kann der Rahmen eines Lagergeschirrs, der auf die Stützen 10a oder auf den Rahmen eines über diesen Stützen 10a befindlichen Lagergeschirrs in vertikaler Richtung in einer horizontalen Ebene aufgesteckt wird, auch in den Rahmen eines in dieser horizontalen Ebene über den Stützen 10 befindlichen Lagergeschirrs vertikal eingesteckt werden, so daß die Rahmen der beiden in derselben horizontalen Ebene nebeneinander befindlichen Lagergeschirre aneinander gehaltert sind und die Standfestigkeit der nebeneinander angeordneten Lagergeschirrstapel verbessert ist.

Auf der Bodenplatte 9 können auch rechtwinklig zur Bodenplatte 9 langgestreckte Führungskörper 13 und 14 angebracht sein. Ein Führungskörper 13 bildet eine vertikale, durchgehende T-Nut, in die eine T-Führung 12, die sich seitlich außen an den Stützen der Lagergeschirre 2, 2a und 2b über den auf der Bodenplatte 9 angebrachten Stützen 10 befindet, in vertikaler Richtung eingesteckt werden kann. Die Führungskörper 14 bilden eine vertikale, durchgehende T-Führung, in die eine T-Nut, die sich seitlich außen an den Stützen der Lagergeschirre über den auf der Bodenplatte 9 angebrachten Stützen 10a befindet, in vertikaler Richtung eingesteckt werden kann. Diese langgestreckten Führungskörper 13 und 14 verbessern nicht nur die Standfestigkeit der Lagergeschirrstapel, sondern sie können auch als Führungshilfen beim fernbedienten Stapeln der Lagergeschirre mit einem Kran dienen.

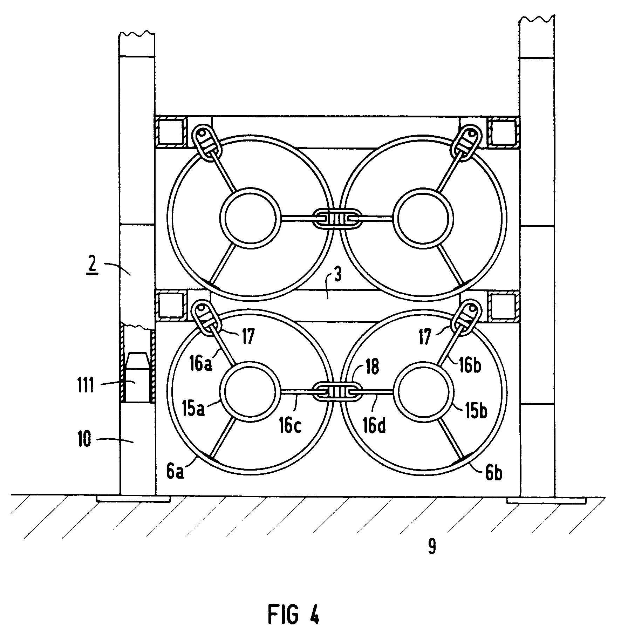

Wie Figur 4 zeigt, können an zwei langgestreckten Aufnahmebehältern 6a und 6b eines Lagergeschirrs 2, die kreisrunden Querschnitt und gleichen Außendurchmesser haben, an beiden Enden koaxiale Rohre 15a und 15b angeordnet sein, die beide gleichen Außendurchmesser haben, der kleiner ist als der Außendurchmesser der beiden Aufnahmebehälter 6a und 6b. An diesen Rohren 15a und 15b sind außen drei Rippen angeordnet, die voneinander jeweils einen Winkelabstand von 120° bezüglich der Längsachse des betreffenden Aufnahmebehälters haben. Jeder Aufnahmebehälter ist an jedem Ende mit einer Öse 17 am Rahmen des Lagergeschirrs 2 angehängt, die lose durch eine Rippe 16a bzw. 16b greift. Eine weitere Öse 18 greift an jedem Ende der beiden Aufnahmebehälter 6a und 6b lose jeweils durch zwei andere Rippen 16c bzw. 16d, so daß beide Aufnahmebehälter 6a und 6b am Rahmen des Lagergeschirrs 2 in allen Richtungen quer zur Vertikalen frei pendelnd angehängt sind.

Ist die Bodenplatte 9 die Bodenplatte eines Transportcontainers, so kann dieser Transportcontainer, nachdem die Lagergeschirre 2 auf der Bodenplatte des Transportcontainers aufgesteckt wurden, noch vorteilhaft mit einem Granulat aufgefüllt sein.

## Patentansprüche

1. Lagerstell zum stoßsicheren Lagern von langgestreckten Gegenständen, insbesondere Kernbrennstoff enthaltenden Brennstäben und/oder Kernreaktorbrennelementen, mit folgenden Merkmalen:
a) An einem ersten, in einer ersten horizontalen Ebene befindlichen flachen Körper (3), insbesondere einem Rahmen, ist unter Ausbildung eines Lagergeschirrs (2) ein langgestreckter, quer zur Vertikalen angeordneter Aufnahmebehälter (6) für den Gegenstand in allen Richtungen quer zur Vertikalen frei pendelnd angehängt,
b) der erste flache Körper (3) ist auf einen zweiten flachen Körper (9) in vertikaler Richtung aufgesteckt, der sich in einer zweiten horizontalen Ebene befindet, die Abstand von der ersten horizontalen Ebene hat

2. Lagergestell nach Anspruch 1,
**dadurch gekennzeichnet**, daß an dem zweiten flachen Körper ein zweiter langgestreckter, quer zur Vertikalen angeordneter Aufnahmebehälter für einen langgestreckten Gegenstand quer zur Vertikalen frei pendelnd angehängt ist.

3. Lagergestell nach Anspruch 1 oder 2,
**dadurch gekennzeichnet**, daß der zweite flache Körper als Rahmen ausgebildet ist.

4. Lagerstell nach Anspruch 1,
**dadurch gekennzeichnet**, daß der zweite flache Körper eine Bodenplatte (9) ist.

5. Lagergestell nach Anspruch 1,
**dadurch gekennzeichnet**, daß der erste flache Körper in einen ebenfalls in der ersten horizontalen Ebene seitlich neben diesem ersten flachen Körper befindlichen dritten flachen Körper, insbesondere einen Rahmen, vertikal eingesteckt ist.

6. Lagergestell nach Anspruch 4,
**dadurch gekennzeichnet**, daß der erste flache Körper vertikal in einen langgestreckten Führungskörper (13, 14) eingesteckt ist, der rechtwinklig zur Bodenplatte (9) auf der Bodenplatte (9) neben diesem ersten flachen Körper angebracht ist.

7. Lagergestell nach Anspruch 4,
**dadurch gekennzeichnet**, daß die Bodenplatte (9) die Bodenplatte eines Transportcontainers ist.

8. Lagergestell nach Anspruch 7,
**dadurch gekennzeichnet**, daß der Transportcontainer mit Granulat ausgefüllt ist.

## Claims

1. Storage rack for the shockproof storage of oblong objects, particularly nuclear fuel-containing fuel rods and/or nuclear reactor fuel elements, comprising the following features:
a) suspended from a first flat body (3) located in a first horizontal plane, more particularly a frame, so as to swing freely in all directions transversely to the vertical is an oblong holding receptacle (6) for the object, thereby forming a storage device (2), the said holding receptacle being arranged transversely to the vertical,
b) the first flat body (3) is mounted in the vertical direction on top of a second flat body (9) located in a second horizontal plane which is distanced from the first horizontal plane.

2. Storage rack according to claim 1,
characterized in that suspended from the second flat body so as to swing freely transversely to the vertical is a second oblong holding receptacle for an oblong object, the said holding receptacle being arranged transversely to the vertical.

3. Storage rack according to claim 1 or 2,
characterized in that the second flat body is designed as a frame.

4. Storage rack according to claim 1,
characterized in that the second flat body is a base plate (9).

5. Storage rack according to claim 1,
characterized in that the first flat body is inserted vertically into a third flat body, more particularly a frame, similarly located in the first horizontal plane laterally adjacent to this first flat body.

6. Storage rack according to claim 4,
characterized in that the first flat body is inserted vertically into an oblong guide body (13, 14) which is fixed on the base plate (9) adjacent to this first flat body at right angles to the base plate (9).

7. Storage rack according to claim 4,
characterized in that the base plate (9) is the base plate of a transport container.

8. Storage rack according to claim 7,
characterized in that the transport container is filled up with granulate.

## Revendications

1. Râtelier pour le stockage, avec protection contre des chocs, d'objets allongés, notamment de barres de combustible contenant un combustible nucléaire et/ou des éléments combustibles de réacteurs nucléaires, présentant les caractéristiques suivantes :
a) à un premier corps plat (3), notamment un cadre, situé dans un premier plan horizontal, est accroché, de manière à avoir un mouvement pendulaire libre dans toutes les directions transversalement par rapport à la verticale et tout en formant une ossature de support (2), un récipient allongé (6) pour l'objet, récipient qui est disposé transversalement par rapport à la verticale,
b) le premier corps plat (3) est emmanché, dans la direction verticale, à un second corps plat (9), qui est situé dans un second plan horizontal qui est situé à distance du premier plan horizontal.

2. Râtelier de stockage suivant la revendication 1, caractérisé par le fait qu'un second récipient allongé, disposé transversalement par rapport à la verticale, pour un objet allongé est suspendu au second corps plat de manière à avoir un mouvement pendulaire libre transversalement par rapport à la verticale.

3. Râtelier de stockage suivant la revendication 1 ou 2, caractérisé par le fait que le second corps plat est agencé sous la forme d'un cadre.

4. Râtelier de stockage suivant la revendication 1, caractérisé en ce que le second corps plat est une plaque de base (9).

5. Râtelier de stockage suivant la revendication 1, caractérisé en ce que le premier corps plat est enfiché verticalement dans un troisième corps plat, notamment un cadre, situé latéralement à côté de ce premier corps plat, également dans le plan horizontal.

6. Râtelier de stockage suivant la revendication 4, caractérisé par le fait que le premier corps plat est enfiché verticalement dans un corps allongé de guidage (13,14), qui est disposé sur la plaque de base (9), perpendiculairement à cette dernière, à côté de ce premier corps plat.

7. Râtelier de stockage suivant la revendication 4, caractérisé par le fait que la plaque de base (9) est la plaque de base d'un conteneur de transport.

8. Râtelier de stockage suivant la revendication 7, caractérisé par le fait que le conteneur de transport est rempli de granulés.
